# EUROPÄISCHE PATENTSCHRIFT

(11) **EP 0 748 779 B1**
(45) Veröffentlichungstag und Bekanntmachung des Hinweises auf die Patenterteilung: **17.05.2000**
(21) Anmeldenummer: 96105420.2
(22) Anmeldetag: 04.04.1996
(51) Int. Cl.: C04B 28/02, C04B 40/06, C09J 5/00, F16B 13/14

(54) **Verankerungspatrone für eine aushärtende Mehrkomponentenmasse**
Anchoring cartridge for hardenable multicomponent mass
Cartouche d'ancrage pour masse durcissable à plusieurs composants

(30) Priorität: 26.05.1995 DE 19519397
(43) Veröffentlichungstag der Anmeldung: 18.12.1996
(73) Patentinhaber: fischerwerke Artur Fischer GmbH & Co. KG, 72178 Waldachtal (DE)
(72) Erfinder: Hein, Bernd, 72290 Freudenstadt (DE); Haug, Willi, 72250 Freudenstadt-Musbach (DE)

(56) Entgegenhaltungen:
- EP-A- 0 502 348
- EP-A- 0 650 942
- DE-A- 3 806 598
- DE-A- 4 339 708
- GB-A- 1 261 943

## Beschreibung

Die Erfindung betrifft eine Verankerungspatrone für eine aushärtende Mehrkomponentenmasse auf der Basis eines radikalisch aushärtenden Harzes (z. B. Polyester-, Vinylester- oder (Meth-)Acrylatharz) gemäß der Gattung des Anspruches 1.

Eine gattungsgemäße Verankerungspatrone, deren Innenpatrone die Harzkomponente und deren Außenpatrone die Härterkomponente aufweist, ist aus der DE-OS 38 06 598 bekannt. Zur Bildung und Fixierung eines Ringspaltes zwischen der Innenpatrone und der Außenpatrone wird ein mit Benzoylperoxidhärter beschichteter Quarzsand verwendet. Durch unterschiedliche Korngröße des Füllstoffes im Ringspalt zwischen den beiden Patronen, wobei sich im vorderen Bereich der Füllstoff mit der feineren Körnung und im hinteren Bereich der mit der größeren Körnung befindet, wird das Eintreiben einer Ankerstange in ein Bohrloch, insbesondere von Hand, erschwert. Durch die unterschiedliche Körnung und der dadurch bedingten unterschiedlich großen Beschichtungsfläche ergeben sich ferner Konzentrationsunterschiede der Härterkomponente im Ringraum, so daß der Aushärtungsprozeß ungleichmäßig verläuft.

Zur Vermeidung dieser Nachteile wurde daher in der Upat UES Stabstahlverankerung vorgeschlagen, die Innenpatrone in der Außenpatrone mittels eines Gemisches aus einem Peroxidhärter und einem Polymerfüllstoff zu fixieren. Dieses als Pulver vorliegende Gemisch erfordert jedoch einen sehr geringen Ringspalt, um ein Absetzen der Härterkomponente in dem Ringraum zwischen Innen- und Außenpatrone zu vermeiden. Des weiteren hat dieses Pulver nur einen geringen Reinigungseffekt der Bohrlochwandung, so daß durch an der Bohrlochwandung haftendes Bohrmehl die Verbundfestigkeit reduziert wird. Als Ausgleich hierfür ist die Viskosität der in der Innenpatrone eingefüllten Harzkomponente sehr nieder eingestellt, um eine gute Benetzung der Bohrlochwandung zu erreichen. Dadurch ergibt sich jedoch beim Setzen der Ankerstange durch Einschlagen der Nachteil, daß das dünnflüssige Harz aus dem Bohrloch ausspritzt bzw. bei der Wandmontage ausfließt. Des weiteren muß auf Füllstoffe im Harz verzichtet werden, da diese sich aufgrund ihrer höheren Dichte in der Patrone absetzen würden. Insbesondere bei Bodenmontagen würde der am Patronengrund abgesetzte Füllstoff ein vollständiges Einschlagen der Ankerstange erheblich erschweren.

Aus der EP-A-650942 ist ein Mörtel als Zweikomponentensystem bekannt. Eine erste Komponente enthält ein hydraulisches Bindemittel und ein radikalisch aushärtendes Harz, die zweite Komponente einen Härter und Wasser. Durch diese Zusammensetzung wird ein Zweikomponenten-Mörtel geschaffen, der unterschiedliche Erhärtungssysteme aufweist, die sich gegenseitig beeinflußen.

Der Erfindung liegt die Aufgabe zugrunde, eine Verbundankerpatrone zu schaffen, die ein Setzen von Hand durch vollständiges Einschlagen einer Ankerstange ohne Ausspritzen oder Ausfließen beim Setzvorgang ermöglicht, deren beide Komponenten eine einfache Zusammensetzung aufweisen, und daß zur Erhöhung der Festigkeit Füllstoffe in beiden Komponenten verwendet werden können.

Die Lösung dieser Aufgabe wird durch die im Anspruch 1 angegebenen Merkmale erreicht.

Die erfindungsgemäße Verankerungspatrone weist ein günstiges Volumenverhältnis zwischen der Harz- und Härterkomponente für eine gute Vermischung auf. Des weiteren ist es möglich, in beide Komponenten Füllstoffe einzubringen, deren Korngröße maximal der Wandungsdicke der Glaspatronen entspricht. Der Volumenanteil der Härterkomponente wird dadurch erhöht, daß die Härterkomponente mit einer Flüssigkeit, wie z. B. Wasser oder organische Lösungsmittel, und einem geeigneten Thixotropiermittel sowie ggf. Füllstoffen zu einer Paste vermischt wird, die den Ringspalt zwischen Innen- und Außenpatrone vollständig ausfüllt. Durch die hohe Viskosität der Paste wird auch in einem größeren Ringraum eine Absetzung verhindert und eine gleichmäßige Verteilung der Härterkomponente auf der gesamten Länge der Patrone erreicht.

Ferner wird durch ein Thixotropiermittel die Viskosität des Harzes soweit erhöht, daß Absetzerscheinungen der Füllstoffe vermieden werden. Durch die Erhöhung der Viskosität des Harzes wird gleichzeitig ein Ausfließen und Ausspritzen beim Setzvorgang vermieden. Die gleichmäßige Verteilung beider Komponenten in der Verankerungspatrone in Verbindung mit den zusätzlichen Füllstoffen in der Harz- und ggf. auch in der Härterkomponente gewährleisten ein gleichmäßiges vollständiges Aushärten der Masse, eine hohe Festigkeit des ausgehärteten Kunstharzmörtels und eine gute Verbundfestigkeit zwischen Kunstharzmörtel und Bohrlochwandung.

Als besonders günstiger Füllstoff in der Harzkomponente hat sich ein reaktives mineralisches Bindemittel auf Zementbasis erwiesen. In diesem Fall ist es zweckmäßig, für das Thixotropiermittel in der Harzkomponente eine pyrogene Kieselsäure zu verwenden. Die Härtekomponente weist als Füllstoff Glasperlen und als Thixotropiermittel eine hydrophobierte pyrogene Kieselsäure auf. Durch das mineralische Bindemittel wird das Fließen des Harz-Härtergemisches gefördert, da sich die in der Härterkomponente eingebundene Flüssigkeit, z. B. Wasser, mit dem mineralischen Bindemittel verbindet. Dadurch wird das Harz-Härtergemisch dünnflüssiger. Die pyrogenen Kieselsäuren als Thixotropiermittel haben die Eigenschaft, daß beim Einschlagen der Ankerstange und der dabei auftretenden Schwerkräfte auf das Gemisch die Viskosität sowohl der Harz- als auch der Härterkomponente reduziert wird. Damit wird die Vermengung der beiden Komponenten gefördert und gleichzeitig das Einschlagen der Ankerstange erleichtert. Durch die in der pastenförmigen Härterkomponente eingebundenen Glasperlen wird einerseits die Druckfestigkeit der Mehrkomponentenmasse nach deren Aushärtung erhöht und andererseits ein Zentriereffekt für einen gleichmäßigen Ringspalt zwischen Innen- und Außenpatrone erreicht.

Als Füllstoff in der Harzkomponente können auch Stahlkugeln verwendet werden. In diesem Fall wird als Thixotropiermittel sowohl in der Harz- als auch in der Härterkomponente pyrogene Kieselsäure eingesetzt und in der Härterkomponente als Flüssigkeit Decahydronaphtalin (Dekalin) verwendet.

Der Durchmesser der aus nichtrostendem Stahl bestehenden Stahlkugeln beträgt 10 - 50 µm vorzugsweise 22 µm. Damit wird einerseits eine ausreichende Fließfähigkeit des Gemisches zur Reduzierung der Einschlagenergie für die Ankerstange und andererseits Absetzerscheinungen vermieden.

Die Härtermischung besteht aus einer pastösen Mischung von Decahydronaphtalin (Dekalin) mit Härter. Dadurch ist eine großfläche Vermischung zwischen Harz und Härter gewährleistet. Durch die pyrogenen Kieselsäuren wird eine Trennung des Härters vom Decahydronaphtalin (Dekalin) verhindert. Bei der Vermischung der Härter- mit der Harzkomponente separiert sich das Decahydronaphtalin (Dekalin), so daß die Reaktion nur zwischen Harz und Härter abläuft.

Um eine Zerkleinerung der Glaspatrone in möglichst kleine Partikel zu erreichen, ist es zweckmäßig, daß der Außendurchmesser der Außenpatrone gleich oder kleiner ist als der Außendurchmesser der Ankerstange.

Für eine ausreichende Festigkeit der ausgehärteten Mehrkomponentenmasse sollte die Gesamtmenge der Zuschlagstoffe einschließlich der Glaspartikel der Verankerungspatrone das 2 - 3,5fache der Harzmasse betragen. Durch die in der Harz- und Härterkomponente bereits enthaltenen Zuschlagstoffe kann die Wandungsdicke der Patronen auf 0,3 - 0,5 mm beschränkt werden. Damit wird ebenfalls die Einschlagenergie für die Ankerstange reduziert.

Nachstehend werden zwei Ausführungsbeispiele einer erfindungsgemäßen Verankerungspatrone für die Ankerstange M16 beschrieben.

| | |
|---|---|
| Länge der Außenpatrone: | 105 mm |
| Durchmesser der Außenpatrone: | 15,5 mm |
| Länge der Innenpatrone: | 90 mm |
| Durchmesser der Innenpatrone: | 12,5 mm |
| Wandungsdicke der Innen- und Außenpatrone | 0,4 mm |

Inhalt des ersten Ausführungsbeispiels:

| Innenpatrone | |
|---|---|
| Vinylesterharz | 6,5 g |
| mineralisches Bindemittel | 3,7 g |
| hydrophobierte pyrogene Kieselsäure | 0,30 g |

| Außenpatrone | |
|---|---|
| Härter (Peroxid mit 50 % Härteranteil/50 % inerter Zuschlag) | 0,53 g |
| Glasperlen | 1,1 g |
| pyrogene Kieselsäure | 0,08 g |
| Wasser | 1,4 g |

Inhalt des zweiten Ausführungsbeispiels:

| Innenpatrone | |
|---|---|
| Vinylesterharz | 6,5 g |
| Stahlkugeln (⌀ 22 µm) | 11,6 g |
| pyrogene Kieselsäure | 0,25 g |

| Außenpatrone | |
|---|---|
| Härter (50 % Peroxid/50 % inerter Zuschlag) | 0,53 g |
| Decahydronaphtalin (Dekalin) | 2,14 g |
| pyrogene Kieselsäure | 0,18 g |

Setzvorgang:

| | |
|---|---|
| Durchmesser des Bohrloches | 18 mm |
| Bohrlochlänge | 150 mm |
| eingeschlagen mit Handhammer 800 g - Schläge | 18 |
| Auszugswert (kN) | 100 |

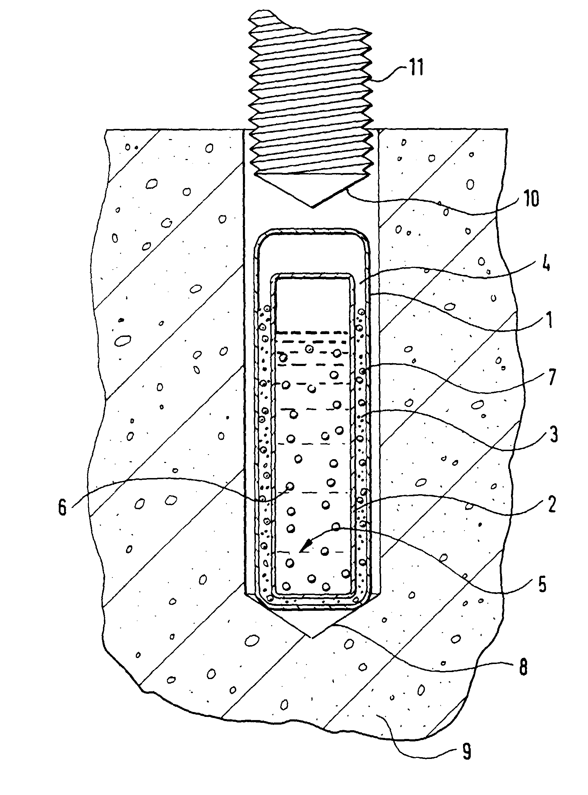

Die Erfindung wird nachfolgend anhand der Zeichnung näher erläutert.

Die Verankerungspatrone aus Glas für eine aushärtende Mehrkomponentenmasse auf Basis eines radikalisch aushärtenden Harzes (z. B. Polyester-, Vinylester- oder (Meth-) Acrylatharz) besteht aus einer Außenpatrone 1 und einer in der Außenpatrone einliegenden Innenpatrone 2, die von der in der Außenpatrone 1 eingefüllten Härterkomponente 3 unter Bildung eines Ringspaltes 4 zentriert wird. In der Innenpatrone 2 ist die Harzkomponente 5 mit Füllstoffen 6 eingefüllt. Auch die als pastenförmige Mischung vorliegende Härterkomponente kann Füllstoffe, beispielsweise Glasperlen 7, enthalten.

Die Verankerungspatrone ist in einem Bohrloch 8 eines Bauteils 9 eingesetzt. Durch Einschlagen der mit einer Keilspitze 10 versehenen Ankerstange 11 wird die Verankerungspatrone zerstört und die in der Verankerungspatrone enthaltenen Komponenten aktiviert. Zur Reduzierung der Einschlagenergie, insbesondere beim Setzen der Ankerstange von Hand mit Hilfe eines Handhammers, ist der Außendurchmesser der Ankerstange 11 etwas kleiner als der Außendurchmesser der Außenpatrone 1. Ferner beträgt die Wandungsdicke der Patrone 0,3 - 0,5 mm, und die lichte Weite des Ringspaltes 4 entspricht mindestens der Wandungsdicke einer Patrone.

## Patentansprüche

1. Verankerungspatrone für eine aushärtende Mehrkomponentenmasse auf Basis eines radikalisch aushärtenden Harzes, wobei die Innenpatrone die Harzkomponente mit Füllstoffen und der Ringspalt zwischen der Innenpatrone und Außenpatrone die Härterkomponente aufweist und beide Komponenten durch Eintreiben einer Ankerstange in das die Verankerungspatrone aufnehmende Bohrloch eines Bauteiles aktiviert werden, **dadurch gekennzeichnet**, daß die Gewichtsanteile der Harzkomponente bezogen auf den Inhalt der Innenpatrone
a) Harz 60 - 64 Gew.-%
b) mineralisches Bindemittel 34 - 37 Gew.-%
c) hydrophobierte pyrogene Kieselsäure 2 - 3 Gew.-%
und die Gewichtsanteile der Härterkomponente bezogen auf den Inhalt der Außenpatrone
d) Härter (50 % Härteranteil/50 % inerter Zuschlag) 16 - 18 Gew.-%
e) Glasperlen 32 - 38 Gew.-%
f) pyrogene Kieselsäure 2 - 3 Gew.-%
g) Wasser 42 - 48 Gew.-%
betragen.

2. Verankerungspatrone für eine aushärtende Mehrkomponentenmasse auf Basis eines radikalisch aushärtenden Harzes, wobei die Innenpatrone die Harzkomponente mit Füllstoffen und der Ringspalt zwischen der Innenpatrone und Außenpatrone die Härterkomponente aufweist und beide Komponenten durch Eintreiben einer Ankerstange in das die Verankerungspatrone aufnehmende Bohrloch eines Bauteiles aktiviert werden, **dadurch gekennzeichnet**, daß die Gewichtsanteile der Harzkomponente bezogen auf den Inhalt der Innenpatrone
a) Harz 30 - 36 Gew.-%
b) rostfreie Stahlkugeln mit einem Durchmesser von 10 - 50 µm 60 - 66 Gew.-%
c) pyrogene Kieselsäure 1 - 1,5 Gew.-%
und die Gewichtsanteile der Härterkomponente bezogen auf den Inhalt der Außenpatrone
d) Härter (50 % Härteranteil/50 % inerter Zuschlag) 17 - 19 Gew.-%
e) Decahydronaphtalin (Dekalin) 71 - 80 Gew.-%
f) pyrogene Kieselsäure 5 - 8 Gew.-%
betragen.

3. Verankerungspatrone nach Anspruch 1 oder 2, **dadurch gekennzeichnet**, daß der Außendurchmesser der Außenpatrone gleich oder kleiner ist als der Außendurchmesser der Ankerstange.

4. Verankerungspatrone nach Anspruch 1 oder 2, **dadurch gekennzeichnet**, daß die Wandungsdicke der Patronen 0,3 - 0,5 mm beträgt.

## Claims

1. An anchoring cartridge for a hardening multi-component composition on the basis of a resin hardening by the reaction of radicals, the inner cartridge containing the resin component with fillers and the annular space between the inner cartridge and the outer cartridge containing the hardener component, and both components being activated by driving an anchoring rod into the hole drilled in a building component receiving the anchoring cartridge, **characterized in that** the proportions by weight of the resin component related to the contents of the inner cartridge are
a) resin 60-64 % by weight
b) mineral bonding agent 34-37 % by weight
c) hydrophobic pyrogenic silicic 2-3 % by weight acid
and the proportions by weight of the hardener component related to the contents of the outer cartridge are
d) hardener (50% hardener proportion/50% inert additive) 16-18 % by weight
e) glass beads 32-38 % by weight
f) pyrogenic silicic acid 2-3 % by weight
g) water 42-48 % by weight.

2. An anchoring cartridge for a hardening multi-component composition on the basis of a resin hardening by the reaction of radicals, the inner cartridge containing the resin component with fillers and the annular space between the inner cartridge and the outer cartridge containing the hardener component, and both components being activated by driving an anchoring rod into the hole drilled in a building component receiving the anchoring cartridge, **characterized in that** the proportions by weight of the resin component related to the contents of the inner cartridge are
a) resin 30-36 % by weight
b) stainless steel balls having a diameter of 10-50 µm 60-66 % by weight
c) pyrogenic silicic acid 1-1.5 % by weight
and the proportions by weight of the hardener component related to the contents of the outer cartridge are
d) hardener (50% hardener proportion/50% inert additive) 17-19 % by weight
e) decahydro-naphthalene (decalin) 71-80 % by weight
f) pyrogenic silicic acid 5-8 % by weight

3. An anchoring cartridge according to claim 1 or 2, **characterized in that** the external diameter of the outer cartridge is the same as or smaller than the external diameter of the anchoring rod.

4. An anchoring cartridge according to claim 1 or 2, **characterized in that** the wall thickness of the cartridges is 0.3 to 0.5 mm.

## Revendications

1. Cartouche d'ancrage pour une masse durcissable à plusieurs composants à base d'une résine durcissant par mécanisme radicalaire, dans le cas de laquelle la cartouche intérieure présente le composant résinique avec des charges et la fente annulaire entre la cartouche extérieure et la cartouche intérieure présente le composant agent de durcissement et les deux composants sont activés par enfoncement d'une tige d'ancrage dans le trou perforé d'un composant qui reçoit la cartouche d'ancrage, **caractérisée par le fait que**, rapporté au contenu de la cartouche intérieure, les proportions pondérales du composant résinique sont :
a) résine 60 - 64 % en poids
b) liant minéral 34 - 37 % en poids
c) silice pyrogène hydrophobe 2 - 3 % en poids
et, rapporté au contenu de la cartouche extérieure, les proportions pondérales du composant agent de durcissement sont :
d) agent de durcissement (50 % agent de durcissement / 50 % additif inerte 16 - 18 % en poids
e) perles de verre 32 - 38 % en poids
f) silice pyrogène 2 - 3 % en poids
g) eau 42 - 48 % en poids

2. Cartouche d'ancrage pour une masse durcissable à plusieurs composants à base d'une résine durcissant par mécanisme radicalaire, dans le cas de laquelle la cartouche intérieure présente le composant résinique avec des charges et la fente annulaire entre la cartouche extérieure et la cartouche intérieure présente le composant agent de durcissement et les deux composants sont activés par enfoncement d'une tige d'ancrage dans le trou perforé d'un composant qui reçoit la cartouche d'ancrage, **caractérisée par le fait que**, rapporté au contenu de la cartouche intérieure, les proportions pondérales du composant résinique sont :
a) résine 30 - 36 % en poids
b) perles d'acier inoxydable d'un diamètre de 10 - 50 µm 60 - 66 % en poids
c) silice pyrogène 1 - 1,5 % en poids
et, rapporté au contenu de la cartouche extérieure, les proportions pondérales du composant agent de durcissement sont :
d) agent de durcissement (50 % agent de durcissement / 50 % additif inerte) 17 - 19 % en poids
e) décahydronaphtaline (décaline) 71 - 80 % en poids
f) silice pyrogène 5 - 8 % en poids

3. Cartouche d'ancrage selon la revendication 1 ou 2, **caractérisée par le fait que** le diamètre de la cartouche extérieure est égal ou inférieur au diamètre extérieur de la tige d'ancrage.

4. Cartouche d'ancrage selon la revendication 1 ou 2, **caractérisée par le fait que** l'épaisseur de paroi des cartouches vaut 0,3 - 0,5 mm.
